# EUROPEAN PATENT SPECIFICATION

(11) **EP 4 397 572 B1**
(45) Date of publication and mention of the grant of the patent: **26.02.2025**
(21) Application number: 23150430.9
(22) Date of filing: 05.01.2023
(51) Int. Cl.: B62D 5/30

(54) **POWER STEERING SYSTEM AND METHOD FOR OPERATING POWER STEERING SYSTEM**
SERVOLENKSYSTEM UND VERFAHREN ZUM BETRIEB DES SERVOLENKSYSTEMS
SYSTÈME DE DIRECTION ASSISTÉE ET PROCÉDÉ DE FONCTIONNEMENT DE SYSTÈME DE DIRECTION ASSISTÉE

(43) Date of publication of application: 10.07.2024
(73) Proprietor: VOLVO TRUCK CORPORATION, 405 08 Göteborg (SE)
(72) Inventor: Husberg, Tobias, 442 93 KAREBY (SE)
(74) Representative: Ström & Gulliksson AB

(56) References cited:
- EP-A1- 3 981 669
- WO-A1-2012/014004
- DE-A1- 102016 225 386

## Description

### TECHNICAL FIELD

The disclosure relates generally to power steering systems. In particular aspects, the disclosure relates to a power steering system and a method for operating a power steering system. The disclosure can be applied in heavy-duty vehicles, such as trucks, buses, and construction equipment. Although the disclosure may be described with respect to a particular vehicle, the disclosure is not restricted to any particular vehicle.

### BACKGROUND

A power steering system has been a standard feature in vehicles for many years, in particular in industrial vehicles. Such a system assists the vehicle driver by applying a force to the wheels, for example through a hydraulic steering actuator. Therefore, a lower effort is required for the driver when turning the steering wheel and the vehicle is easier to maneuver.

A power steering system typically comprises a hydraulic circuit carrying a pressurized fluid - such as oil - from a tank to the steering actuator, by means of a pump.

In many power steering systems, the pump is driven by the vehicle combustion engine, generally gear driven or belt-driven by said engine.

Fully electric solutions for power steering has become increasingly popular. However, such electric solutions do not fulfill future safety or redundancy requirements due to being reliant on power being present. Further, fully electric solutions are often less energy efficient than fully mechanically driven power steering systems at least during certain conditions. Examples of power steering system are described in DE 10 2016 225386 A1, EP 3 981 669 A1 and WO 2012/014004 A1. Furthermore, DE 10 2016 225386 A1 discloses the following features of independent claim 1: a power steering system for a vehicle, the power steering system comprising a power steering pump, an electrical machine unit, a clutch arrangement and a power steering control system configured to control the power steering system, wherein: - the electrical machine unit is configured to drive the power steering pump and to be operatively connected to and powered by an energy storage of the vehicle, - the power steering pump is configured to be connected to a torque output source of the vehicle, the power steering pump being configured to be driven by means of torque provided by the torque output source, - the clutch arrangement is configured to selectively connect the power steering pump to the torque output source,wherein the power steering control system is configured to control the clutch arrangement and the electrical machine unit to cause the power steering system to be operable in an electrical steering mode wherein the electrical machine unit drives the power steering pump and a mechanical steering mode wherein the power steering pump is driven by means of the torque provided by the torque output source.

To address the redundancy requirements, dual power steering pumps are commonly used today for safety purposes. Dual power steering pump systems are not ideal when it comes to drivability/steering wheel feeling. For example, when the pumps for providing the power steering are shifted, e.g. when the motor is shut off, and the electrical pump starts, it can be felt in the steering wheel. Furthermore, due to the pressure drop, flow drops or pulsations can occur in the hydraulic circuit.

### SUMMARY

According to a first aspect of the disclosure, a power steering system for a vehicle is provided. The power steering system may comprise a power steering pump, an electrical machine unit, a clutch arrangement and a power steering control system. The power steering control system may be configured to control the power steering system.

The electrical machine unit may be configured to drive the power steering pump. The electrical machine unit may further be configured to be operatively connected to and powered by an energy storage of the vehicle. The power steering pump may be configured to be connected to a torque output source of the vehicle. The power steering pump may be configured to be driven by means of torque provided by the torque output source.

The clutch arrangement may be configured to selectively connect the power steering pump to the torque output source.

The power steering control system may be configured to control the clutch arrangement and the electrical machine unit to cause the power steering system to be operable in an electrical steering mode wherein the electrical machine unit drives the power steering pump and a mechanical steering mode wherein the power steering pump is driven by means of the torque provided by the torque output source.

The first aspect of the disclosure may seek to achieve a power steering system which is more energy efficient compared to conventional dual pump power steering systems and single pump power steering systems, in particular electrical power steering systems. A technical benefit may include that the clutch arrangement allows for control and optimization in the selection between electrically and mechanically driven power steering allowing for control to achieve a more energy efficient power steering system. A technical benefit may include that redundancy for the power steering system is achieved even though a single power steering pump is utilized since the pump can be driven both mechanically and electrically, thereby a less complex power steering system that ensures redundancy in case of a loss of power is provided. Another technical benefit may include that sufficient power steering may be ensured by means of the switching between modes regardless of the road conditions or if the vehicle is freewheeling or travels at very low speeds etc.

In some examples, the power steering control system may be configured to cause enabling of torque transfer from the electrical machine unit to the power steering pump. The power steering control system may further be configured to cause the clutch arrangement to disconnect the power steering pump from the torque output source in the electrical steering mode. A technical benefit may include a more energy efficient power steering system due to disconnecting the power steering pump from the torque output source reduces the energy losses in the electrical steering mode.

In some examples, the power steering control system may be configured to cause disabling of torque transfer from the electrical machine unit to the power steering pump. The power steering control system may be further configured to cause the clutch arrangement to connect the power steering pump to the torque output source in the mechanical steering mode. A technical benefit of such a mechanical steering mode may include a more energy efficient power steering system at high vehicle speeds due to the torque output source being able to efficiently provide a relatively large torque to the power steering pump because of the connection between the torque output source and the ground via the wheels.

In some examples, the clutch arrangement may be operable between a closed state wherein the clutch arrangement connects the torque output source to the power steering pump and an opened state wherein the clutch arrangement disconnects the torque output source from the power steering pump. A technical benefit may include that the clutch arrangement in the opened state is actuated and locked and hence does not consume any power during the electrical steering mode, thus not contributing to depletion of the energy storage of the vehicle.

In some examples, the power steering control system may be configured to control the torque transfer between the power steering pump and the electrical machine unit by means of control of an electrical machine clutch of the electrical machine unit. A technical benefit may include that the electrical machine may be completely disconnected reducing the energy losses in the power steering system during operation in the mechanical steering mode.

In some examples, the power steering control system may be configured to control the torque transfer between the power steering pump and the electrical machine unit by means of control of an electrical machine of the electrical machine unit. A technical benefit may include that no additional components are required for controlling the torque transfer from the electrical machine unit, whereby a less complex system is achieved.

In some examples, the torque output source may be a propeller shaft of the vehicle. In some examples, the torque output source may be a transmission output shaft connected to the transmission system. A technical benefit may include that the speed of the rotation transferred to the power steering pump is not disrupted during gear shifts which mitigates the need for synchronizing the speed of the input shaft of the power steering system with the speed of the torque output source or temporarily disconnecting the torque output source from the power steering system during gear shifts.

In some examples, the torque output source may be a countershaft of the vehicle. A technical benefit may include that connecting the power steering system to a countershaft allows for a more space-efficient and less-complex installation of the power steering system in the vehicle.

In some examples, the power steering control system may be configured to control the clutch arrangement and the electrical machine unit to cause the power steering system to be operable in a deactivated steering mode wherein the power steering mode wherein the power steering system does not provide any assistance for the steering of the vehicle. A technical benefit may include that the deactivated steering mode allows for further energy optimization since the power steering system can be deactivated when not needed for example when the vehicle travels at very high speeds, when the road ahead of the vehicle or a planned route for the vehicle does not require use of the power steering system or during gear shifts.

In some examples, the power steering control system may be configured to cause the power steering system to operate in any one of the electrical steering mode, the mechanical steering mode and the deactivated steering mode based on energy management parameter data relating to the operation of the vehicle. A technical benefit may include that the mode allowing for the most energy-efficient power steering may be chosen depending on present or predicted conditions affecting the efficiency of the power steering system and the vehicle as a whole, whereby a more energy efficient power steering system is achieved.

In some examples, the energy management parameter data comprises at least one of: vehicle speed data, energy storage state of charge data, energy recuperation braking data, transmissions system operational data, vehicle position data, data relating to the road ahead of the vehicle and data relating to a planned route of the vehicle. A technical benefit may include that the power steering mode may be selected in accordance with a determined power steering need associated with present or predicted conditions.

In some examples, the power steering control system may be configured to cause the power steering system to operate in any one of the electrical steering mode, the mechanical steering mode and the deactivated steering mode based on data relating to the road ahead of the vehicle and/or a planned route of the vehicle. A technical benefit may include that the power steering mode may be selected based on the route of the vehicle, taking into account for example the curves of the road, the predicted speed of the vehicle etc.. Thereby, the system may switch between the steering modes to reduce the energy consumption of the power steering system for the road ahead resulting in a more energy efficient power steering system.

In some examples, the power steering control system may be configured to cause the power steering system to operate in the electrical steering mode in response to the speed of the vehicle falling below an electric steering speed threshold. A technical benefit may include that the power steering system ensures that a desired level of steering assistance is provided at lower speeds where the ground driven power steering provided in the mechanical steering may be insufficient.

In some examples, the power steering control system may be configured to cause the power steering system to operate in the mechanical steering mode in response to the speed of the vehicle exceeding a mechanical steering speed threshold. A technical benefit may include that the power steering system ensures that the mechanical steering mode which is more energy efficient at higher vehicle speeds is utilized, thereby increasing the energy efficiency at high speeds.

In some examples, the power steering control system may be configured to cause the power steering system to operate in the mechanical steering mode in response to the state of charge of the energy storage falling below a mechanical drive state of charge threshold. A technical benefit may include that power steering system does not deplete the energy storage at times where mechanical power steering is viable.

In some examples, the power steering control system may be configured to cause the power steering system to operate in the mechanical steering mode in response to the energy recuperation data indicating that regenerative braking of the vehicle is predicted and/or initiated. A technical benefit may include that this allows for the electrical machine to recuperate energy for the energy storage during braking, increasing the energy efficiency of the power steering system.

In some examples, the power steering control system may be configured to cause the power steering system to operate in the deactivated steering mode in response to the speed of the vehicle exceeding a deactivation vehicle speed threshold. A technical benefit may include that power steering is completely deactivated at high speeds where the requirements on steering assistance are very low, thereby the energy consumption of the vehicle may be reduced.

In some examples, the power steering control system may be configured to cause the power steering system to operate in the deactivated steering mode in response to the transmission system operational data indicating that a gear shift in the transmission system is predicted and/or initiated. A technical benefit may include that the gear shift is not disrupted or hindered by the torque transfer between the transmission and the power steering system.

According to a second aspect of the disclosure, a vehicle is provided. The vehicle may comprise a power steering system according to any of the above examples, a transmission system, an energy storage, a torque output source and a propulsion source connected to the transmission system. The second aspect of the disclosure may seek to achieve a safe and energy efficient manner of obtaining steering assistance for a vehicle. A technical benefit may include that the power steering system allows for energy optimization by switching between the power steering modes as well as redundancy without the use of multiple pumps.

According to a third aspect of the disclosure, a method for operating a power steering system is provided. The method comprises obtaining energy management parameter data relating to the operation of the vehicle and causing switching between the electrical steering mode and the mechanical steering mode based on the energy management parameter data. The third aspect of the disclosure may seek to achieve a more energy efficient manner of operating the power steering system. A technical benefit may include that the mode allowing for the most energy-efficient power steering may be chosen depending on the present or predicted conditions of the road the vehicle travels on or parameters directly relating to the operation of the vehicle, whereby a more energy efficient power steering system is achieved. Another technical benefit may include that sufficient power steering may be ensured by means of the switching between modes regardless of the road conditions or if the vehicle is freewheeling or travels at very low speeds etc.

In some examples, the energy management parameter data comprises at least one of: vehicle speed data, energy storage state of charge data, energy recuperation braking data, transmission system operational data, vehicle position data, data relating to the road ahead of the vehicle and data relating to a planned route of the vehicle. A technical benefit may include that the power steering mode may be selected in accordance with a determined power steering need associated with present or predicted conditions.

In some examples, the method may further comprise causing the power steering system to operate in any one of the electrical steering mode, the mechanical steering mode and the deactivated steering mode based on data relating to the road ahead of the vehicle and/or a planned route of the vehicle. A technical benefit may include that the power steering mode may be selected in accordance with a determined power steering need associated with present or predicted conditions.

In some examples, the method may further comprise causing the power steering system to operate in the electrical steering mode in response to the speed of the vehicle falling below an electric steering speed threshold. A technical benefit may include that the power steering system ensures that a desired level of steering assistance is provided at lower speeds where the ground driven power steering provided in the mechanical steering may be insufficient.

In some examples, the method may comprise causing the power steering system to operate in the mechanical steering mode in response to the speed of the vehicle exceeding a mechanical steering speed threshold. A technical benefit may include that the power steering system ensures that the mechanical steering mode which is more energy efficient at higher vehicle speeds is utilized, thereby increasing the energy efficiency at high speeds.

In some examples, the method may comprise causing the power steering system to operate in the mechanical steering mode in response to the state of charge of the energy storage falling below a mechanical drive state of charge threshold. A technical benefit may include that power steering system does not deplete the energy storage at times where mechanical power steering is viable.

In some examples, the method may comprise causing the power steering system to operate in the mechanical steering mode in response to the energy recuperation data indicating that regenerative braking of the vehicle is predicted and/or initiated. A technical benefit may include that this allows for the electrical machine to recuperate energy for the energy storage during braking, increasing the energy efficiency of the power steering system.

In some examples, the method may comprise causing the power steering system to operate in the deactivated steering mode in response to the speed of the vehicle exceeding a deactivation vehicle speed threshold. A technical benefit may include that power steering is completely deactivated at high speeds where the requirements on steering assistance are very low, thereby the energy consumption of the vehicle may be reduced.

In some examples, the method may comprise causing the power steering system to operate in the deactivated steering mode in response to the transmission system operational data indicating that a gear shift in the transmission system is predicted and/or initiated. A technical benefit may include that the gear shift is not disrupted or hindered by the torque transfer between the transmission and the power steering system.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
**FIG. 1** is an exemplary vehicle and drivetrain system according to one example.
**FIG. 2** is an exemplary steering system according to one example.
**FIG. 3** is an exemplary power steering system according to one example.
**FIG. 4** is an exemplary power steering system according to another example.
**FIG. 5** is an exemplary power steering system according to another example.
**FIG. 6** is an exemplary power steering system according to another example.
**FIG. 7** is an exemplary method of operating a power steering system according one example.
**FIG. 8** is a schematic diagram of system for implementing examples disclosed herein, according to one example.
**FIG. 9** is a schematic diagram of system for implementing examples disclosed herein, according to one example.
**FIG. 10** is a schematic diagram of an exemplary computer system for implementing examples disclosed herein, according to one example.

### DETAILED DESCRIPTION

Aspects set forth below represent the necessary information to enable those skilled in the art to practice the disclosure.

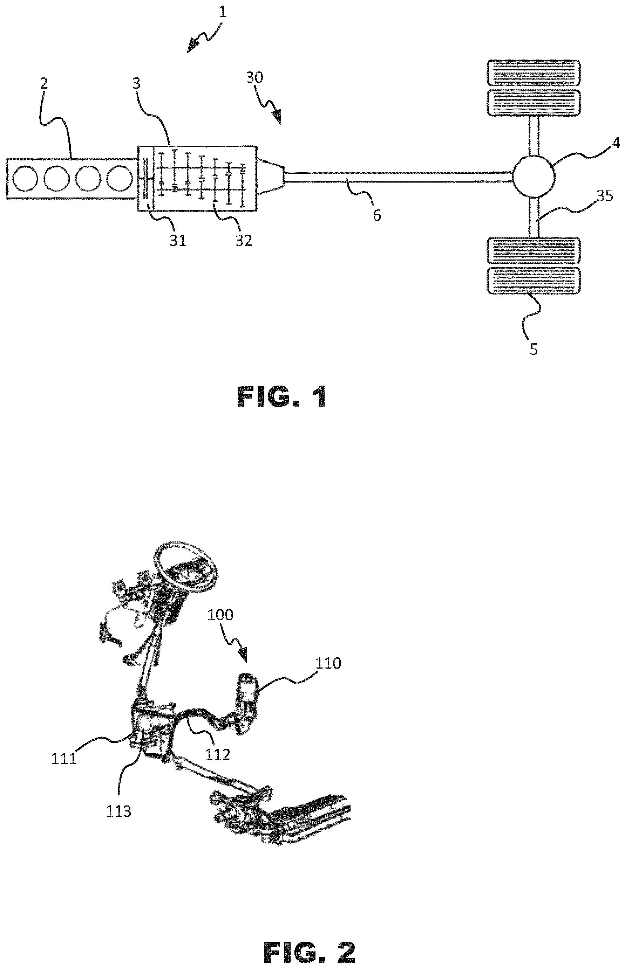

**FIG. 1** illustrates a vehicle 1, such as a commercial vehicle or truck, and a power steering system and a drivetrain for the vehicle 1.

The vehicle **1** may comprise a propulsion source **2.** The propulsion source **2** may be configured to propel the vehicle **1.** The propulsion source **2** may be a traction engine which is able to drive the drive wheels **5** of the vehicle **1** through a driveline **30.** In many cases, such as in a conventional truck as represented on **FIG. 1****,** the propulsion source **2** is a combustion engine and the drivetrain includes mainly a clutch **31,** a transmission system **3** comprising a gearbox **32,** a propeller shaft **6,** a differential **4** and a drive shaft **35** for each drive wheel **5.**

In such a case, it is possible to define a downstream portion of the drivetrain as being the portion which is permanently connected to the drive wheels **5,** even if the clutch **31** is opened, thereby disconnecting the gearbox from the traction engine, and/or if the gearbox is in neutral. In such a case, the downstream portion of the gearbox can be considered to start from the gearbox assembly output shaft and also comprises the propulsion shaft, the differential and the drive shafts. In the case of a purely electrical vehicle, where the propulsion source **2** is an electrical motor, a similar drivetrain can be used, possibly without the clutch. In a parallel hybrid truck, an electric motor can be added to the drivetrain of a conventional truck, for example upstream of the transmission system, although such an electrical motor could also be connected downstream of the gearbox. A series hybrid vehicle can be considered as a variant of an electrical vehicle where at least part of the electrical power needed by the traction engine is provided by an electrical generator driven by a combustion engine.

The vehicle **1** may further comprises a power steering system in order to assist the driver in steering the vehicle **1.** The power steering system serves to assist the steering system of the vehicle **1.**

An example of a steering system is depicted in **FIG. 2****.** The steering system may comprise a power steering system **100.** The power steering system **100** may comprise a closed fluid circuit **112** in which a fluid, can flow from a fluid tank **111** to a steering actuator **113** and then back to the fluid tank **111.** Hence, the power steering system **100** may comprise the steering actuator **113,** the fluid tank **111** and the power steering pump **110.**

The fluid may be moved in the closed fluid circuit **112** by means of a power steering pump **110.** The power steering pump **110** may be arranged between the fluid tank **111** and the steering actuator **113.** The steering actuator **113** may be configured to provide steering assistance for the vehicle by means of providing torque to the steering gear of the vehicle.

The power steering system **100** may be a hydraulic power steering system. Hence, the fluid utilized may be oil, the closed fluid circuit **112** may be a closed hydraulic circuit, the steering actuator **113** may be a hydraulic steering actuator and the power steering pump **110** may be a hydraulic power steering pump.

Both electrically and mechanically driven power steering systems have been implemented in the past. However, electrically driven power steering systems are not energy efficient during some conditions and mechanically driven power steering systems does not provide adequate power steering during freewheeling and low vehicle speeds. These shortcomings have been addressed with dual pump systems, however the switching between the pumps can be felt in the steering wheel and therefore negatively affects the drivability of the vehicle.

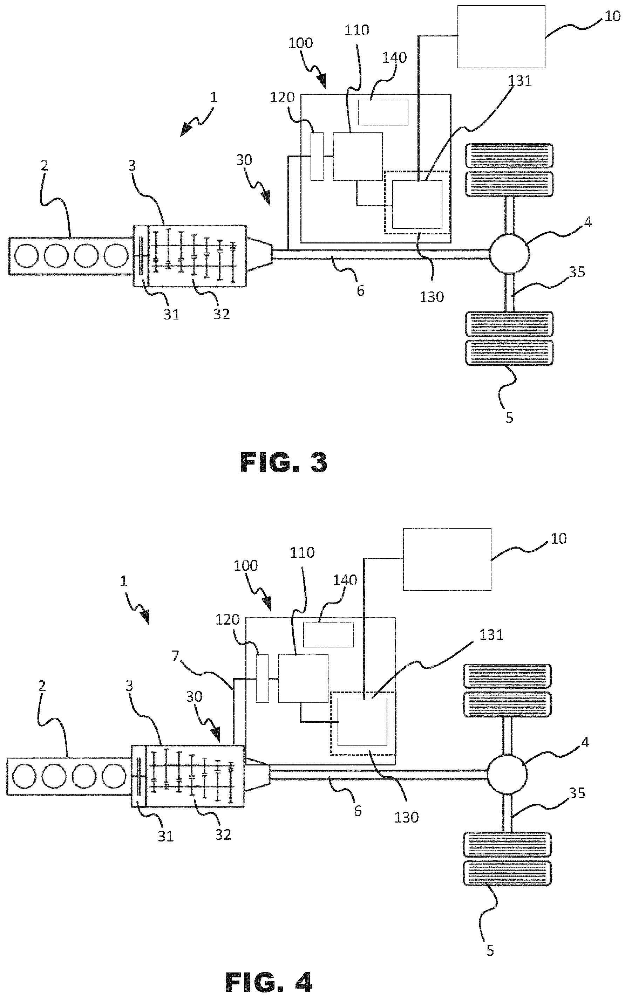

**FIG. 3-6** depicts power steering systems according to different examples which may be utilized in order to address the aforementioned shortcomings. The examples depicted in **FIG. 3-6** may implement the functionality described with reference to **FIG. 2** and may be comprised in a vehicle **1** described with reference to **FIG. 1****.**

The power steering system **100** may comprise the power steering pump **110.** The power steering system **100** may further comprise an electrical machine unit **130,** a clutch arrangement **120** and a power steering control system **140.** The power steering control system **140** may be configured to control the power steering system **100.**

The electrical machine unit **130** may be configured to drive the power steering pump **110.** The electrical machine unit **130** may be configured to be operatively connected to and powered by an energy storage **10** of the vehicle **1.** The electrical machine unit **130** may thus be electrically connected to the energy storage **10.**

It may be envisioned that the energy storage is an electrical energy storage. The electrical energy storage may be any conventional and suitable type available for such an application. The electrical energy storage may comprise one or more batteries and/or one or more super-capacitors.

The energy storage **10** may be an energy storage configured to solely power the electrical machine unit **130.** In other examples, the energy storage **10** may be configured to power multiple components of the vehicle **1.** For example the energy storage **10** may be configured to drive an electrical propulsion source of the vehicle **1** and/or pumps utilized for other purposes such as oil pumps, cooling pumps etc. of the vehicle **1.**

The electrical machine unit **130** may comprise an electrical machine **131.** The electrical machine **130** may thus be powered by the energy storage **10.** The electrical machine **131** may be configured to operate as an electrical motor. It may further be possible for the electrical machine **131** to operate as a generator.

The power steering pump **110** may be configured to be operatively connected to a torque output source **6, 7.** The torque output source **6, 7** may be arranged downstream of the transmission system **3** of the vehicle **1.** The power steering pump **110** may be configured to be driven by means of torque provided by the torque output source **6, 7.**

The torque output source **6, 7** may be configured to transfer an output torque from the drivetrain at a position downstream of the gearbox **32** of the transmission system 3. The torque output source **6, 7** may thus be configured to transfer a ground driven rotation to the power steering pump **110.** The torque output source **6, 7** may be considered an output shaft connected to the transmission system **3.**

It is noted that ground driven herein refers to the power steering pump **110** being driven by means of the rotation of the wheels contrary to the rotation of a motor shaft.

The clutch arrangement **120** may be configured to selectively connect the power steering pump **110** to the torque output source **6, 7.** The clutch arrangement **120** may be any clutch arrangement suitable for selectively enabling transfer of torque between rotating components.

The power steering control system **140** may be configured to control the clutch arrangement **120** and the electrical machine unit **130** to cause the power steering system **100** to be operable in an electrical steering mode **EM** and a mechanical steering mode **MM.** The power steering control system **140** may be operatively connected to the clutch arrangement **120** and the electrical machine unit **130.**

In the electrical steering mode **EM,** the electrical machine **130** may drive the power steering pump **110.** Hence, in the electrical steering mode EM, the power steering pump **110** may be electrically driven.

In the mechanical steering mode **MM,** the power steering pump **110** is driven by means of the torque provided by the torque output source **6, 7.** Hence, in the mechanical steering mode **MM,** the power steering pump **110** may be ground driven, e.g. driven by the rotation of the wheels of the vehicle.

The power steering control system **140** may be configured to cause enabling of torque transfer from the electrical machine unit **130** to the power steering pump **110** in the electrical steering mode **EM.** The power steering control system **140** may be configured to cause the clutch arrangement **120** to disconnect the power steering pump **110** from the torque output source **6, 7** in the electrical steering mode **EM.** Configured to cause enabling of torque transfer may herein refer to the power steering control system **140** causing operation of the electrical machine unit **130** to transfer torque to the power steering pump **110** for driving said power steering pump **110.**

The power steering control system **140** may be configured to cause disabling of torque transfer from the electrical machine **130** to the power steering pump **110** in the mechanical steering mode **MM.** The power steering control system **140** may be configured to cause the clutch arrangement **120** to connect the power steering pump **110** to the torque output source **6, 7** in the mechanical steering mode **MM.** Configured to cause disabling of torque transfer may herein refer to the power steering control system **140** causing operation of the electrical machine unit to disable any transfer of torque to the power steering pump **110.** Hence, in the mechanical steering mode **MM,** the electrical machine unit **130** is configured to not transfer any torque to the power steering pump **110** for driving said power steering pump **110.**

The clutch arrangement **120** may operable between a closed state and an opened state. In the closed state, the clutch arrangement **120** may connect the torque output source **6, 7** to the power steering pump **110.** In the opened state, the clutch arrangement **120** may disconnect the torque output source **6, 7** from the power steering pump **110.**

The clutch arrangement **120** may comprise a clutch actuator and a clutch. The clutch may be a pneumatically operated clutch, a viscous coupling, an electromagnetically operable clutch or a hydraulically operated clutch. Advantageously, the clutch may be a pneumatically operated clutch. Thereby, a more robust and precisely operable clutch may be achieved.

The clutch may comprise a first and second clutch member. The clutch arrangement **120** may be configured to operate the first clutch member to engage the second clutch member, thereby enabling torque transfer through the clutch arrangement **120.** Thus, the one of the first and second clutch member may be rigidly connected to the torque output source **6, 7** and the other of the first and second clutch member may be rigidly connected to the power steering pump **110.** In the opened state, the clutch actuator may be in an active position. In the closed state, the clutch actuator may be in a resting position.

Preferably, the clutch is a mechanical and actuated clutch such as a toothed coupling, dog coupling or claw coupling. The actuator may be a pneumatic actuator.

The power steering control system **140** may be configured to control the clutch arrangement **120** and the electrical machine unit **130** to cause the power steering system **100** to be operable in a deactivated steering mode **DM.** In the deactivated steering mode **DM,** the power steering system **100** does not provide any assistance for the steering of the vehicle **1.**

The implementation of the clutch arrangement **120** and the electrical machine unit **130** as well as the connection between the torque output source **6, 7** and the power steering pump **110** allows for selection between the steering modes in order to increase energy efficiency and/or the performance of the power steering system.

The power steering control system **140** may be configured to cause the power steering system **100** to operate in any one of the steering modes, e.g. the electrical steering mode **ED,** the mechanical steering mode **MD** and the deactivated steering mode **DM,** based on energy management parameter data relating to the operation of the vehicle **1.**

Energy management parameter data relating to the operation of the vehicle **1** herein refers to data associated with the any aspect of the operation of the vehicle **1** impacting the energy consumption of the power steering system (and thereby the efficiency of the power steering system) and thus the energy consumption of the vehicle as a whole. Such aspects may include properties of the road the vehicle travels on, the speed of the vehicle, predicted gear shifts etc.

The energy management parameter data may comprise at least one of: vehicle speed data, energy storage state of charge data, energy recuperation braking data, transmission system operational data, vehicle position data, data relating to the road ahead of the vehicle and data relating to a planned route of the vehicle.

The energy management parameter data may comprise data relating to the road ahead of the vehicle **1.** The data may thus relate to the road on which the vehicle **1** travels and in particular the road segment ahead of the vehicle **1** in the travelling direction of the vehicle **1.** The data may thus be based on map data relating to the road on which the vehicle **1** travels. The map data may comprise data from a Geographic Information System (GIS). The data may comprise data associated with the topography of the road ahead of the vehicle **1** and/or the curvature of the road ahead of the vehicle **1.** The data may further include data indicating the predicted speeds and/or gear shifts during the travelling on the road ahead of the vehicle **1.** In one example, the data may be limited to a set distance of road ahead such as 100 to 1000 meters.

The energy management parameter data may comprise data relating to a planned route of the vehicle **1.** The data relating to a planned route of the vehicle **1** may comprise positional data such as data from a Geographic Information System (GIS). The data may comprise data associated with the topography of the planned route of the vehicle **1** and/or the curvature of the planned route of the vehicle **1.** The data may further include data indicating the predicted speeds and/or gear shifts during the travelling on the planned route of the vehicle **1.**

Thus, the data relating to the road ahead of the vehicle and/or planned route of the vehicle **1** may be utilized to determine the power steering needs for the vehicle **1.** The power steering control system **140** may thus be configured to determine the power steering need for the road ahead and/or planned route based on said data and during travelling cause switching between steering modes based on the determined power steering needs.

For example, if the vehicle **1** is intended to travel at a low speed and/or on a curvy road, the electrical steering mode may be favored over the mechanical steering mode as the mechanical steering mode does not transfer as much torque at low speeds due to being ground driven (connected to the wheels of the vehicle) and the need for steering assistance being greater at lower speeds. If the vehicle is intended to travel at high speeds however, the deactivated steering mode and/or the mechanical steering mode may be favored as the mechanical steering mode will provide sufficient power steering assistance at high speeds.

The energy management parameter data may comprise vehicle speed data. Hence, the energy management parameter data may comprise data associated with the speed of the vehicle **1.** The vehicle speed data may be associated with a predicted speed of the vehicle **1,** for example for the road ahead of the vehicle **1,** a planned route of the vehicle **1,** and/or a current speed of the vehicle **1.** The current speed of the vehicle **1** may be a calculated speed of the vehicle **1** or a measured speed of the vehicle 1 obtained by a speed sensor operatively connected to the power steering control system **140.**

The power steering control system **140** may be configured to cause the power steering system **100** to operate in the electrical steering mode **EM** in response to the speed of the vehicle **1** falling below an electric steering speed threshold. The power steering control system **140** may be configured to cause switching to the electrical steering mode EM in response to the speed of the vehicle **1** falling below the electric steering speed threshold. The electrical steering speed threshold may be in the form of a speed value.

The power steering control system **140** may be configured to cause the power steering system **100** to operate in the mechanical steering mode **MM** in response to the speed of the vehicle **1** exceeding a mechanical steering speed threshold. The power steering control system **140** may be configured to cause switching to the mechanical steering mode **MM** in response to the speed of the vehicle 1 exceeding the mechanical steering speed threshold. The mechanical steering speed threshold may be in the form of a speed value.

The power steering control system **140** may be configured to cause the power steering system **100** to operate in the deactivated steering mode **DM** in response to the speed of the vehicle **1** exceeding a deactivation vehicle speed threshold. The power steering control system **140** may be configured to cause switching to the deactivated steering mode **DM** in response to the speed of the vehicle **1** exceeding the deactivation vehicle speed threshold. The deactivation vehicle speed threshold may be in the form of a speed value.

The deactivation vehicle speed threshold may be higher than the mechanical steering speed threshold. Thus it may be ensured that power steering is deactivated completely in order to increase the energy efficiency of the vehicle when there is no need for power steering assistance at high speeds. It is further noted that the deactivation vehicle speed threshold may be greater than the electrical steering speed threshold.

The mechanical steering speed threshold may be higher than the electrical steering speed threshold. Thus it may be ensured that the electrical steering mode is utilized at lower speeds where the power steering needs are high and the mechanical steering mode is utilized at higher speeds there where the power steering needs are lower and the mechanical steering mode is more energy-efficient.

The energy management parameter data may comprise energy storage state of charge data. Hence, the energy management parameter data may comprise data associated with the state of charge of the energy storage **10** of the vehicle **1.** The energy storage state of charge data may be associated with a predicted state of charge of the energy storage **10,** for example for the road ahead of the vehicle **1** or during a planned route of the vehicle **1,** and/or a current state of charge of the energy storage **10.** The current state of charge of the energy storage **10** may be a calculated state of charge of the energy storage **10** or a measured state of charge of the energy storage **10** obtained by a state of charge sensor operatively connected to the power steering control system **140.**

The power steering control system **140** may be configured to cause the power steering system **100** to operate in the mechanical steering mode **MM** in response to the state of charge of the energy storage **10** falling below a mechanical drive state of charge threshold. The power steering control system may be configured to cause switching to the mechanical steering mode **MM** in response to the state of charge of the energy storage **10** falling below a mechanical drive state of charge threshold.

The energy management parameter data may comprise energy recuperation braking data. Hence, the energy management parameter data may comprise data associated with regenerative braking of the vehicle **1.**

The power steering control system **140** may be configured to cause the power steering system **100** to operate in the mechanical steering mode **MM** in response to the energy recuperation data indicating that regenerative braking of the vehicle **1** is predicted and/or initiated.

The energy management parameter data may comprise transmission system operational data. Thus, the energy management parameter data may comprise data associated with the operation of the transmission system **3.** Said data may comprise data associated with the operation of the gearbox **32** of the transmission system **3.** Such data may include data associated with predicted or initiated gear shifts of the gearbox **32.**

The power steering control system **140** may be operatively connected to a transmission control unit of the transmission system **3** and configured to obtain the transmission system operational data from said transmission control unit.

The power steering control system **140** may be configured to cause the power steering system 100 to operate in the deactivated steering mode **DM** in response to the transmission system operational data indicating that a gear shift in the transmission system **3** is predicted and/or initiated. The power steering control system **140** may be configured to cause switching to the deactivated steering mode **DM** in response to the transmission system operational data indicating that a gear shift in the transmission system **3,** i.e. the gearbox **32,** is predicted and/or initiated. Thereby it is ensured that the power steering system does not disturb the transmission system during gear shifts.

The power steering control system **140** may be configured to control the torque transfer between power steering pump **110** and the electrical machine unit **130.** This may be achieved in different manners.

Referencing **FIG. 3-4****,** the power steering control system **140** may be configured to control the torque transfer between the power steering pump **110** and the electrical machine unit **130** by means of control of the electrical machine unit **130.**

Thus, the power steering control system **140** may be configured to cause the electrical machine unit **130** to terminate torque transfer to the power steering pump **110.** This may be achieved by motor braking the electrical machine **131** or by stopping the supply of current from the energy storage **10** to the electrical machine thereby stopping the rotation of the electrical machine **131.**

The clutch arrangement **120** and the pump **110** may be connected to the torque output source via a gearing interface. The torque output source hence may comprise a shaft connected to said gearing interface.

As depicted in **FIG. 3****,** the torque output source may be a propeller shaft **6** of the vehicle **1.** Thus, the clutch arrangement **120** may be configured to be connected to the propeller shaft **6.** The clutch arrangement **120** may be arranged between the power steering pump **110** and the propeller shaft **6.** The clutch arrangement **120** may be configured to selectively enable torque transfer from the propeller shaft **6** to the power steering pump **110** for driving the power steering pump **110.**

In one example, the torque output source may be a transmission output shaft connected to the transmission system 3. The transmission output shaft may hence be arranged downstream the transmission of the transmission system 3. Thus, the clutch arrangement **120** may be configured to be connected to the transmission output shaft. The clutch arrangement **120** may be arranged between the power steering pump **110** and the transmission output shaft. The clutch arrangement **120** may be configured to selectively enable torque transfer from the transmission output shaft to the power steering pump **110** for driving the power steering pump **110.**

In the example of **FIG. 3****,** the electrical steering mode **EM** is obtained by means of the power steering control system **140** causing the clutch arrangement **120** to disconnect the power steering pump **110** from the torque output source **6,** herein in the form of the propeller shaft **6.** The electrical steering mode **EM** is further obtained by means of the power steering control system **140** causing operation of the electrical machine unit **130** for driving the power steering pump **110.**

Correspondingly, the mechanical steering mode **MM** may be obtained by means of the power steering control system **140** causing the clutch arrangement **120** to connect the power steering pump **110** to the torque output source **6,** herein in the form of the propeller shaft **6.** The mechanical steering mode **MM** is further obtained by means of the power steering control system **140** disabling torque transfer from the electrical machine unit **130.** This may be achieved by causing the electrical machine **131** to be demagnetized and/or be inoperable.

The deactivated steering mode **DM** may be obtained by means of the power steering control system **140** causing the clutch arrangement **120** to disconnect the power steering pump **110** from the torque output source 6, herein in the form of the propeller shaft **6,** and to disable torque transfer from the electrical machine unit **130** by causing the electrical machine **131** to demagnetize and/or to be inoperable.

In one example, the power steering pump **110** may be a variable displacement pump. Thus, the power steering pump **110** may have a variable displacement. The power steering control system **140** may be configured to control the variable displacement of the power steering pump **110.** The deactivated steering mode DM may thus be achieved by means of controlling of the displacement of the power steering pump **110.** Thus, in the deactivated steering mode **DM,** the power control system **140** may control the variable displacement such that the power steering pump **110** provides only a limited flow of fluid, whereby the power steering system **100** does not provide any assistance for the steering of the vehicle **1.**

As depicted in **FIG. 4****,** the torque output source may be a countershaft **7** of the vehicle **1.** The countershaft **7** may form a part of a PTO. The clutch arrangement **120** may be configured to be connected to the countershaft **7.** The clutch arrangement **120** may be arranged between the power steering pump **110** and the countershaft **7.** The clutch arrangement **120** may be configured to selectively enable torque transfer from the countershaft **7** to the power steering pump **110** for driving the power steering pump **110.**

In the example of **FIG. 4****,** the electrical steering mode **EM** is obtained by means of the power steering control system **140** causing the clutch arrangement **120** to disconnect the power steering pump **110** from the torque output source **7,** herein in the form of the countershaft **7.** The electrical steering mode **EM** is further obtained by means of the power steering control system **140** causing operation of the electrical machine unit **130** for driving the power steering pump **110.**

Correspondingly, the mechanical steering mode **MM** may be obtained by means of the power steering control system **140** causing the clutch arrangement **120** to connect the power steering pump **110** to the torque output source **7,** herein in the form of the countershaft **7.** The mechanical steering mode **MM** is further obtained by means of the power steering control system **140** disabling torque transfer from the electrical machine unit **130.** This may be achieved by causing the electrical machine **131** to be demagnetized and/or be inoperable.

The deactivated steering mode **DM** may be obtained by means of the power steering control system **140** causing the clutch arrangement **120** to disconnect the power steering pump **110** from the torque output source **7,** herein in the form of the countershaft **7,** and to disable torque transfer from the electrical machine unit **130** by causing the electrical machine **131** to be demagnetized and/or be inoperable.

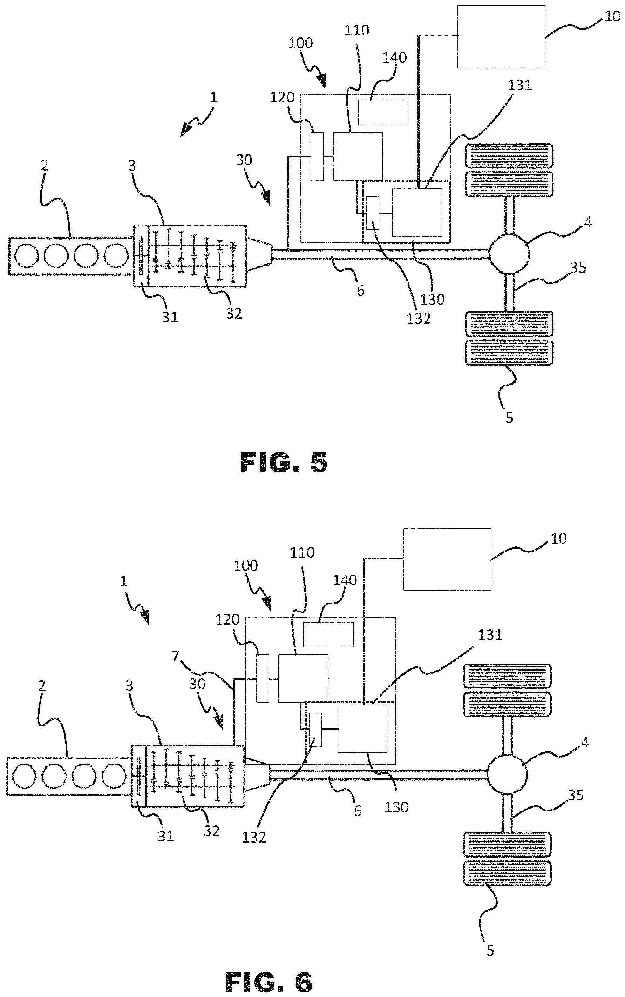

Referencing **FIG. 5-6****,** the power steering control system **140** may be configured to control the torque transfer between the power steering pump **110** and the electrical machine unit **130** by means of control of an electrical machine clutch **132** of the electrical machine unit **130.** The electrical machine clutch **132** may include any type of suitable clutch readily available for the skilled person. The electrical machine clutch **132** may be a pneumatically operated clutch, a viscous coupling, an electromagnetically operable clutch or an hydraulically operated clutch.

For the sake of robustness, the electrical machine clutch **132** may be a pneumatically operated clutch. Preferably, the electrical machine clutch **132** is a mechanical and actuated clutch such as a toothed coupling, dog coupling or claw coupling. Thus, the electrical machine clutch 132 may be operable by means of an actuator. The actuator may be a pneumatic actuator.

The power steering control system **140** may thus be configured to cause the electrical machine clutch **132** to selectively connect the electrical machine **131** and the power steering pump **110,** thereby controlling the torque transfer between the electrical machine **131** and the power steering pump **110.** The clutch electrical machine clutch **132** may thus be arranged between the electrical machine **131** and the power steering pump **110.**

In the example of **FIG. 5****,** the electrical steering mode **EM** is obtained by means of the power steering control system **140** causing the clutch arrangement **120** to disconnect the power steering pump **110** from the torque output source **6,** herein in the form of the propeller shaft **6.** The electrical steering mode **EM** is further obtained by means of the power steering control system **140** causing operation of the electrical machine unit **130** for driving the power steering pump **110** and/or the causing the electrical machine clutch **132** to connect the power steering pump **110** to the electrical machine **131.**

Correspondingly, the mechanical steering mode **MM** may be obtained by means of the power steering control system **140** causing the clutch arrangement **120** to connect the power steering pump **110** to the torque output source **6,** herein in the form of the propeller shaft **6.** The mechanical steering mode **MM** is further obtained by means of the power steering control system **140** disabling torque transfer from the electrical machine unit **130b** and/or causing the electrical machine clutch **132** to disconnect the power steering pump **110** from the electrical machine **131.**

The deactivated steering mode **DM** may be obtained by means of the power steering control system **140** causing the clutch arrangement **120** to disconnect the power steering pump **110** from the torque output source **6,** herein in the form of the propeller shaft **6,** and to disable torque transfer from the electrical machine unit **130** by causing the electrical machine **131** to be demagnetized and/or be inoperable and/or causing the electrical machine clutch **132** to disconnect the power steering pump 110 from the electrical machine **131.**

In the example of **FIG. 6****,** the electrical steering mode **EM** is obtained by means of the power steering control system **140** causing the clutch arrangement **120** to disconnect the power steering pump **110** from the torque output source **7,** herein in the form of the countershaft **7.** The electrical steering mode **EM** is further obtained by means of the power steering control system **140** causing operation of the electrical machine unit **130** for driving the power steering pump **110** and/or the causing the electrical machine clutch **132** to connect the power steering pump **110** to the electrical machine **131.**

Correspondingly, the mechanical steering mode **MM** may be obtained by means of the power steering control system **140** causing the clutch arrangement **120** to connect the power steering pump **110** to the torque output source **7,** herein in the form of the countershaft **7.** The mechanical steering mode **MM** is further obtained by means of the power steering control system **140** disabling torque transfer from the electrical machine unit **130.** This may be achieved by causing the electrical machine **131** to be demagnetized and/or be inoperable and/or causing the electrical machine clutch **132** to disconnect the power steering pump **110** from the electrical machine **131.**

The deactivated steering mode **DM** may be obtained by means of the power steering control system **140** causing the clutch arrangement **120** to disconnect the power steering pump **110** from the torque output source **7,** herein in the form of the countershaft **7,** and to disable torque transfer from the electrical machine unit **130** by causing the electrical machine **131** to be demagnetized and/or be inoperable and/or causing the electrical machine clutch **132** to disconnect the power steering pump **110** from the electrical machine **131.**

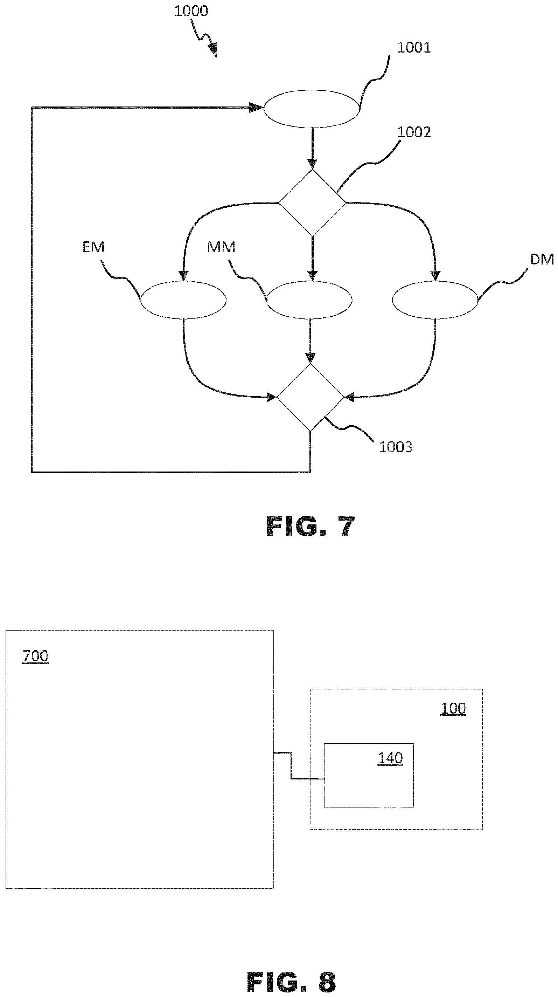

**FIG. 7** schematically depicts a method **1000** for operating the power steering system **100** according to one example. The power steering system **100** may be a power steering system **100** according to any one of the aforementioned examples.

The method may comprise obtaining **1001** energy management parameter data relating to the operation of the vehicle **1** and causing switching **1002** between the electrical steering mode **EM** and the mechanical steering mode **MM** based on the obtained energy management parameter data.

The energy management parameter data may comprise at least one of: vehicle speed data energy storage state of charge data, energy recuperation braking data, transmission system operational data, vehicle position data, data relating to the road ahead of the vehicle and data relating to a planned route of the vehicle.

Upon switching to the selected power steering mode, e.g. one of the electrical steering mode EM, the mechanical steering mode MM and the deactivated steering mode DM, the method may comprise operating **1003** in said selected power steering mode.

The method may comprise causing the power steering system **100** to operate in any one of the electrical steering mode **EM,** the mechanical steering mode **MM** and the deactivated steering mode **DM** based on data relating to the road ahead of the vehicle and/or a planned route of the vehicle. Thus, the method may comprise switching between any one of the electrical steering mode **EM,** the mechanical steering mode **MM** and the deactivated steering mode **DM** based on data relating to the road ahead of the vehicle and/or a planned route of the vehicle.

The method may comprise causing the power steering system **100** to operate in the electrical steering mode **EM** in response to the speed of the vehicle **1** falling below an electric steering speed threshold. The method may comprise switching to the electrical steering mode **EM** in response to the speed of the vehicle **1** falling below an electric steering speed threshold. The speed of the vehicle may be a current speed of the vehicle or a predicted speed of the vehicle.

The method may comprise causing the power steering system **100** to operate in the mechanical steering mode **MM** in response to the speed of the vehicle **1** exceeding a mechanical steering speed threshold. The method may comprise switching to the mechanical steering mode **MM** in response to the speed of the vehicle exceeding a mechanical steering speed threshold. The speed of the vehicle may be a current speed of the vehicle or a predicted speed of the vehicle.

The method may comprise causing the power steering system **100** to operate in the mechanical steering mode **MM** in response to the state of charge of the energy storage **10** falling below a mechanical drive state of charge threshold. The method may comprise switching to the mechanical steering mode MM in response to the state of charge of the energy storage **10** falling below a mechanical drive state of charge threshold. The state of charge may be a current state of charge or a predicted state of charge of the energy storage.

The method may comprise causing the power steering system **100** to operate in the mechanical steering mode **MM** in response to the energy recuperating data indicating that regenerative braking of the vehicle **1** is predicted and/or initiated. The method may comprise switching to the mechanical steering mode **MM** in response to the energy recuperation data indicating that regenerative braking of the vehicle **1** is predicted and/or initiated.

The method may comprise causing the power steering system **100** to operate in the deactivated steering mode **DM** in response to the speed of the vehicle **1** exceeding a deactivation vehicle speed threshold. The method may comprise causing the power steering system **100** to switch to the deactivated steering mode **DM** in response to the speed of the vehicle **1** exceeding a deactivation vehicle speed threshold. The speed of the vehicle may be a current speed of the vehicle or a predicted speed of the vehicle.

The method may comprise causing the power steering system **100** to operate in the deactivated steering mode **DM** in response to the transmission system operational data indicating that a gear shift in the transmission system **3** is predicted and/or initiated. The method may comprise switching to the deactivated steering mode **DM** in response to the transmission system operational data indicating that a gear shift in the transmission system **3** is predicted and/or initiated.

The method described with reference to **FIG. 7** may be performed by means of the power steering control system **140.**

As depicted in **FIG. 8****,** the power steering control system **140** may be operatively connected to a computer system **700** for performing the method **1000** described with reference to **FIG. 7****.** The computer system **700** may be operatively connected to the power steering control system **140** via any readily available communication connection, for example via CAN.

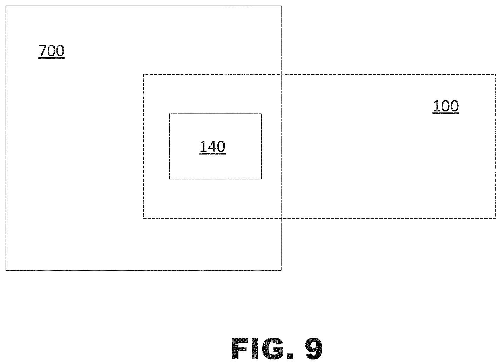

According to another example, depicted in **FIG. 9****,** the power steering control system 140 may be comprised in the computer system **700.** For example, the processor device of the computer system **700** may comprise the power steering control system.

In one example, the vehicle 1 may comprise the computer system **700.**

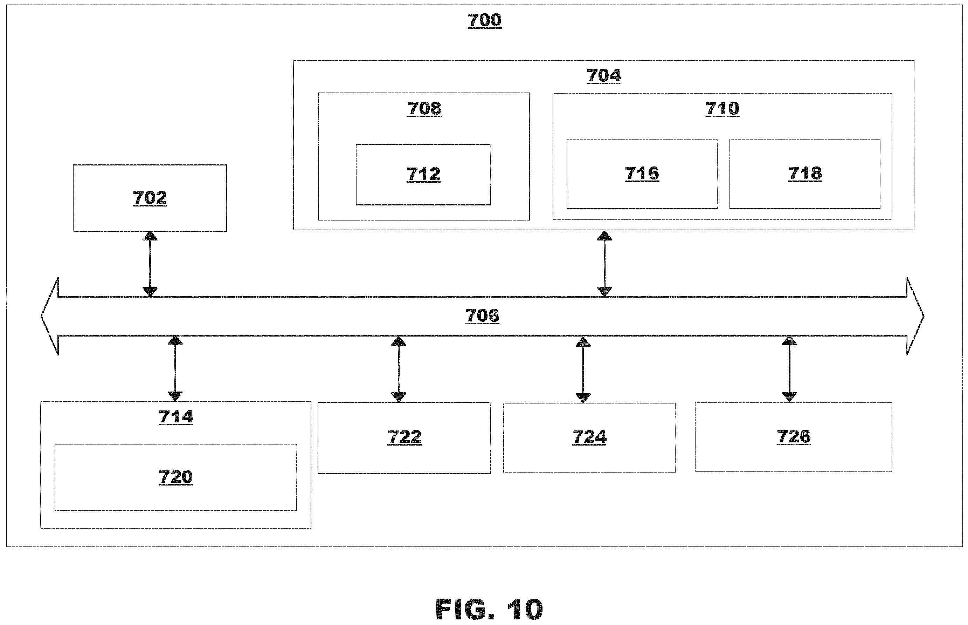

**FIG. 10** is a schematic diagram of the computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN, an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include a processor device **702** (may also be referred to as a control unit), a memory **704,** and a system bus **706.** The computer system **700** may include at least one computing device having the processor device **702.** The system bus **706** provides an interface for system components including, but not limited to, the memory **704** and the processor device **702.** The processor device **702** may include any number of hardware components for conducting data or signal processing or for executing computer code stored in memory **704.** The processor device **702** (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processor device **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with a processor device **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program product **720** stored on a transitory or non-transitory computer-usable or computer-readable storage medium (e.g., single medium or multiple media), such as the storage device **714,** which includes complex programming instructions (e.g., complex computer-readable program code) to cause the processor device **702** to carry out the steps described herein. Thus, the computer-readable program code can comprise software instructions for implementing the functionality of the examples described herein when executed by the processor device **702.** The processor device **702** may serve as a controller or control system for the computer system **700** that is to implement the functionality described herein.

The computer system **700** also may include an input device interface **722** (e.g., input device interface and/or output device interface). The input device interface **722** may be configured to receive input and selections to be communicated to the computer system **700** when executing instructions, such as from a keyboard, mouse, touch-sensitive surface, etc. Such input devices may be connected to the processor device **702** through the input device interface **722** coupled to the system bus **706** but can be connected through other interfaces such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may also include a communications interface **726** suitable for communicating with a network as appropriate or desired.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A power steering system (100) for a vehicle (1), the power steering system (100) comprising a power steering pump (110), an electrical machine unit (130), a clutch arrangement (120) and a power steering control system (140) configured to control the power steering system (100), wherein:
- the electrical machine unit (130) is configured to drive the power steering pump (110) and to be operatively connected to and powered by an energy storage (10) of the vehicle (1),
- the power steering pump (110) is configured to be connected to a torque output source (6, 7) arranged downstream of a transmission system (3) of the vehicle (1), the power steering pump (110) being configured to be driven by means of torque provided by the torque output source (6, 7),
- the clutch arrangement (120) is configured to selectively connect the power steering pump (110) to the torque output source (6, 7),
wherein the power steering control system (140) is configured to control the clutch arrangement (120) and the electrical machine unit (130) to cause the power steering system (100) to be operable in an electrical steering mode (EM) wherein the electrical machine unit (130) drives the power steering pump (110) and a mechanical steering mode (MM) wherein the power steering pump (110) is driven by means of the torque provided by the torque output source (6, 7).

2. The power steering system (100) of claim 1, wherein the power steering control system (140) is configured to cause enabling of torque transfer from the electrical machine unit (130) to the power steering pump (110) and the clutch arrangement (120) to disconnect the power steering pump (110) from the torque output source (6, 7) in the electrical steering mode (EM).

3. The power steering system (100) of any of the claims 1-2, wherein the power steering control system (140) is configured to cause disabling of torque transfer from the electrical machine unit (130) to the power steering pump (110) and the clutch arrangement (120) to connect the power steering pump (110) to the torque output source (6, 7) in the mechanical steering mode (MM).

4. The power steering system (100) of any of claims 1-3, wherein the clutch arrangement (120) is operable between a closed state wherein the clutch arrangement (120) connects the torque output source (6, 7) to the power steering pump (110) and an opened state wherein the clutch arrangement (120) disconnects the torque output source (6, 7) from the power steering pump (110).

5. The power steering system (100) of any of the claims 1-4, wherein the power steering control system (140) is configured to control the torque transfer between the power steering pump (110) and the electrical machine unit (130) by means of control of an electrical machine clutch (132) of the electrical machine unit (130) and/or control of an electrical machine (131) of the electrical machine unit (130).

6. The power steering system (100) of any of the claims 1-5, wherein the torque output source (6, 7) is a propeller shaft (6) of the vehicle (1) or a transmission output shaft connected to the transmission system (3).

7. The power steering system (100) of any of the claims 1-6, wherein the torque output source (6, 7) is a countershaft (7) of the vehicle (1).

8. The power steering system (100) of any of claims 1-7, wherein the power steering control system (140) is configured to control the clutch arrangement (120) and the electrical machine unit (130) to cause the power steering system (100) to be operable in a deactivated steering mode (DM) wherein the power steering system (100) does not provide any assistance for the steering of the vehicle (1).

9. The power steering system (100) of any of the claims 1-8, wherein the power steering control system (140) is configured to cause the power steering system (100) to operate in any one of the electrical steering mode (ED), mechanical steering mode (MD) and the deactivated steering mode (DM) based on energy management parameter data relating to the operation of the vehicle (1).

10. The power steering system (100) of claim 9, wherein the energy management parameter data comprises at least one of: vehicle speed data, energy storage state of charge data, energy recuperation braking data, transmission system operational data, vehicle position data, data relating to the road ahead of the vehicle and data relating to a planned route of the vehicle.

11. The power steering system (100) of claim 10, wherein the power steering control system (140) is configured to cause the power steering system (100) to operate in any one of the electrical steering mode (EM), the mechanical steering mode (MM) and the deactivated steering mode (DM) based on data relating to the road ahead of the vehicle and/or a planned route of the vehicle.

12. The power steering system (100) of claim 10 or 11, wherein the power steering control system (140) is configured to cause the power steering system (100) to operate in the electrical steering mode (EM) in response to the speed of the vehicle (1) falling below an electric steering speed threshold.

13. The power steering system (100) of any of claims 10-12, wherein the power steering control system (140) is configured to cause the power steering system (100) to operate in the mechanical steering mode (MM) in response to the speed of the vehicle (1) exceeding a mechanical steering speed threshold.

14. The power steering system (100) of any of claims 10-13, wherein the power steering control system (140) is configured to cause the power steering system (100) to operate in the mechanical steering mode (MM) in response to the state of charge of the energy storage (10) falling below a mechanical drive state of charge threshold.

15. The power steering system (100) of any of claims 10-14, wherein the power steering control system (140) is configured to cause the power steering system (100) to operate in the mechanical steering mode (MM) in response to the energy recuperation data indicating that regenerative braking of the vehicle (1) is predicted and/or initiated.

16. The power steering system (100) of any of claim 10-15, wherein the power steering control system (140) is configured to cause the power steering system (100) to operate in the deactivated steering mode (DM) in response to the speed of the vehicle (1) exceeding a deactivation vehicle speed threshold.

17. The power steering system (100) of any of claims 10-16, wherein the power steering control system (140) is configured to cause the power steering system (100) to operate in the deactivated steering mode (DM) in response to the transmissions system operational data indicating that a gear shift in the transmission system (3) is predicted and/or initiated.

18. A vehicle (1) comprising the power steering system (100) according to any of claims 1-17, a transmission system (3), an energy storage (10), a torque output source (6, 7) and a propulsion source (2) connected to the transmission system (3).

19. A method (1000) for operating a power steering system (100) according to any of claims 1-17, wherein the method comprises:
- obtaining (1001) energy management parameter data relating to the operation of the vehicle (1), and
- causing switching (1002) between the electrical steering mode (EM) and the mechanical steering mode (MM) based on said energy management parameter data.

20. The method (1000) of claim 19, wherein the energy management parameter data comprises at least one of: vehicle speed data, energy storage state of charge data, energy recuperation braking data, transmission system operational data, vehicle position data, data relating to the road ahead of the vehicle and data relating to a planned route of the vehicle.

21. The method (1000) of claim 20, further comprising:
- causing the power steering system (100) to operate in any one of the electrical steering mode (EM), the mechanical steering mode (MM) and the deactivated steering mode (DM) based on data relating to the road ahead of the vehicle and/or a planned route of the vehicle.

22. The method (1000) of claim 20 or 21, further comprising:
- causing the power steering system (100) to operate in the electrical steering mode (EM) in response to the speed of the vehicle (1) falling below an electric steering speed threshold.

23. The method (1000) of any one of claim 20-22, further comprising:
- causing the power steering system (100) to operate in the mechanical steering mode (MM) in response to the speed of the vehicle (1) exceeding a mechanical steering speed threshold.

24. The method (1000) of any of claim 20-23, further comprising:
- causing the power steering system (100) to operate in the mechanical steering mode (MM) in response to the state of charge of the energy storage (10) falling below a mechanical drive state of charge threshold.

25. The method (1000) of any of claim 20-24, further comprising:
- causing the power steering system (100) to operate in the mechanical steering mode (MM) in response to the energy recuperation data indicating that regenerative braking of the vehicle (1) is predicted and/or initiated.

26. The method (1000) of any of claim 20-25, further comprising:
- causing the power steering system (100) to operate in the deactivated steering mode (DM) in response to the speed of the vehicle (1) exceeding a deactivation vehicle speed threshold.

27. The method (1000) of any of claims 20-26, further comprising:
- causing the power steering system (100) to operate in the deactivated steering mode (DM) in response to the transmissions system operational data indicating that a gear shift in the transmission system (3) is predicted and/or initiated.

## Patentansprüche

1. Ein Servolenkungssystem (100) für ein Fahrzeug (1), das Servolenkungssystem (100) umfassend eine Servolenkungspumpe (110), eine elektrische Maschineneinheit (130), eine Kupplungsanordnung (120) und ein Servolenkungssteuersystem (140), das konfiguriert ist, das Servolenkungssystem (100) zu steuern, wobei:
- die elektrische Maschineneinheit (130) konfiguriert ist, die Servolenkungspumpe (110) anzutreiben und operativ mit einem Energiespeicher (10) des Fahrzeugs (1) verbunden zu sein und von diesem gespeist zu werden,
- die Servolenkungspumpe (110) konfiguriert ist, mit einer stromabwärts eines Getriebesystems (3) des Fahrzeugs (1) angeordneten Drehmomentabgabequelle (6, 7) verbunden zu sein, wobei die Servolenkungspumpe (110) konfiguriert ist, mittels eines von der Drehmomentabgabequelle (6, 7) bereitgestellten Drehmoments angetrieben zu werden,
- die Kupplungsanordnung (120) konfiguriert ist, die Servolenkungspumpe (110) selektiv mit der Drehmomentabgabequelle (6, 7) zu verbinden,
wobei das Servolenkungs-Steuersystem (140) konfiguriert ist, die Kupplungsanordnung (120) und die elektrische Maschineneinheit (130) zu steuern, um zu bewirken, dass das Servolenkungssystem (100) in einem elektrischen Lenkmodus (EM), in dem die elektrische Maschineneinheit (130) die Servolenkungspumpe (110) antreibt, und einem mechanischen Lenkmodus (MM), in dem die Servolenkungspumpe (110) mittels des von der Drehmomentabgabequelle (6, 7) bereitgestellten Drehmoments angetrieben wird, betrieben werden kann.

2. Servolenkungssystem (100) nach Anspruch 1, wobei das Servolenkungs-Steuersystem (140) konfiguriert ist, die Ermöglichung der Drehmomentübertragung von der elektrischen Maschineneinheit (130) auf die Servolenkungspumpe (110) und die Kupplungsanordnung (120) zu bewirken, um die Servolenkungspumpe (110) von der Drehmomentabgabequelle (6, 7) im elektrischen Lenkmodus (EM) zu trennen.

3. Servolenkungssystem (100) nach einem der Ansprüche 1-2, wobei das Servolenkungs-Steuersystem (140) konfiguriert ist, die Deaktivierung der Drehmomentübertragung von der elektrischen Maschineneinheit (130) auf die Servolenkungspumpe (110) und die Kupplungsanordnung (120) zu bewirken, um die Servolenkungspumpe (110) mit der Drehmomentabgabequelle (6, 7) im mechanischen Lenkmodus (MM) zu verbinden.

4. Servolenkungssystem (100) nach einem der Ansprüche 1-3, wobei die Kupplungsanordnung (120) zwischen einem geschlossenen Zustand, in dem die Kupplungsanordnung (120) die Drehmomentabgabequelle (6, 7) mit der Servolenkungspumpe (110) verbindet, und einem geöffneten Zustand, in dem die Kupplungsanordnung (120) die Drehmomentabgabequelle (6, 7) von der Servolenkungspumpe (110) trennt, betätigbar ist.

5. Servolenkungssystem (100) nach einem der Ansprüche 1-4, wobei das Servolenkungs-Steuersystem (140) konfiguriert ist, die Drehmomentübertragung zwischen der Servolenkungspumpe (110) und der elektrischen Maschineneinheit (130) mittels Steuerung einer elektrischen Maschinenkupplung (132) der elektrischen Maschineneinheit (130) und/oder Steuerung einer elektrischen Maschine (131) der elektrischen Maschineneinheit (130) zu steuern.

6. Servolenkungssystem (100) nach einem der Ansprüche 1-5, wobei die Drehmomentabgabequelle (6, 7) eine Gelenkwelle (6) des Fahrzeugs (1) oder eine mit dem Getriebesystem (3) verbundene Getriebeabgabewelle ist.

7. Servolenkungssystem (100) nach einem der Ansprüche 1-6, wobei die Drehmomentabgabequelle (6, 7) eine Vorgelegewelle (7) des Fahrzeugs (1) ist.

8. Servolenkungssystem (100) nach einem der Ansprüche 1-7, wobei das Servolenkungs-Steuersystem (140) konfiguriert ist, die Kupplungsanordnung (120) und die elektrische Maschineneinheit (130) zu steuern, um zu bewirken, dass das Servolenkungssystem (100) in einem deaktivierten Lenkmodus (DM) betrieben werden kann, in dem das Servolenkungssystem (100) keine Unterstützung für die Lenkung des Fahrzeugs (1) bereitstellt.

9. Servolenkungssystem (100) nach einem der Ansprüche 1-8, wobei das Servolenkungs-Steuersystem (140) konfiguriert ist, zu bewirken, das Servolenkungssystem (100) auf der Grundlage von Energiemanagement-Parameterdaten, die sich auf den Betrieb des Fahrzeugs (1) beziehen, im elektrischen Lenkmodus (ED), im mechanischen Lenkmodus (MD) oder im deaktivierten Lenkmodus (DM) zu betreiben.

10. Servolenkungssystem (100) nach Anspruch 9, wobei die Energiemanagement-Parameterdaten mindestens eines umfasst: Fahrzeuggeschwindigkeitsdaten, Energiespeicher-Ladezustandsdaten, Energierückgewinnungs-Bremsdaten, Getriebesystem-Betriebsdaten, Fahrzeugpositionsdaten, Daten in Bezug auf die Straße vor dem Fahrzeug und Daten in Bezug auf eine geplante Route des Fahrzeugs.

11. Servolenkungssystem (100) nach Anspruch 10, wobei das Servolenkungs-Steuersystem (140) konfiguriert ist, zu bewirken, das Servolenkungssystem (100) auf der Grundlage von Daten, die sich auf die vor dem Fahrzeug liegende Straße und/oder eine geplante Route des Fahrzeugs beziehen, in dem elektrischen Lenkmodus (EM), in dem mechanischen Lenkmodus (MM) und dem deaktivierten Lenkmodus (DM) zu betreiben.

12. Servolenkungssystem (100) nach Anspruch 10 oder 11, wobei das Servolenkungs-Steuersystem (140) konfiguriert ist, zu bewirken, das Servolenkungssystem (100) im elektrischen Lenkmodus (EM) zu betreiben, wenn die Geschwindigkeit des Fahrzeugs (1) unter einen Schwellenwert für die elektrische Lenkgeschwindigkeit fällt.

13. Servolenkungssystem (100) nach einem der Ansprüche 10-12, wobei das Servolenkungs-Steuersystem (140) konfiguriert ist, zu bewirken, das Servolenkungssystem (100) im mechanischen Lenkmodus (MM) zu betreiben, wenn die Geschwindigkeit des Fahrzeugs (1) einen Schwellenwert für die mechanische Lenkgeschwindigkeit überschreitet.

14. Servolenkungssystem (100) nach einem der Ansprüche 10-13, wobei das Servolenkungs-Steuersystem (140) konfiguriert ist, zu bewirken, das Servolenkungssystem (100) im mechanischen Lenkungsmodus (MM) zu betreiben, wenn der Ladezustand des Energiespeichers (10) unter einen Schwellenwert für den Ladezustand des mechanischen Antriebszustands fällt.

15. Servolenkungssystem (100) nach einem der Ansprüche 10-14, wobei das Servolenkungssteuersystem (140) konfiguriert ist, zu bewirken, das Servolenkungssystem (100) im mechanischen Lenkungsmodus (MM) zu betreiben, wenn die Energierückgewinnungsdaten anzeigen, dass ein regeneratives Bremsen des Fahrzeugs (1) vorhergesagt und/oder eingeleitet wird.

16. Servolenkungssystem (100) nach einem der Ansprüche 10-15, wobei das Servolenkungs-Steuersystem (140) konfiguriert ist, zu bewirken, das Servolenkungssystem (100) im deaktivierten Lenkmodus (DM) zu betreiben, wenn die Geschwindigkeit des Fahrzeugs (1) einen Deaktivierungs-Fahrzeuggeschwindigkeits-Schwellenwert überschreitet.

17. Servolenkungssystem (100) nach einem der Ansprüche 10-16, wobei das Servolenkungs-Steuersystem (140) konfiguriert ist, zu bewirken, das Servolenkungssystem (100) im deaktivierten Lenkmodus (DM) zu betreiben, wenn die Betriebsdaten des Getriebesystems anzeigen, dass ein Gangwechsel im Getriebesystem (3) vorhergesagt und/oder eingeleitet wird.

18. Fahrzeug (1) umfassend das Servolenkungssystem (100) nach einem der Ansprüche 1-17, ein Getriebesystem (3), einen Energiespeicher (10), eine Drehmomentabgabequelle (6, 7) und eine mit dem Getriebesystem (3) verbundene Antriebsquelle (2).

19. Verfahren (1000) zum Betreiben eines Servolenkungssystems (100) nach einem der Ansprüche 1-17, wobei das Verfahren umfasst:
- Erhalten (1001) von Energiemanagement-Parameterdaten, die sich auf den Betrieb des Fahrzeugs (1) beziehen, und
- Bewirken eines Umschaltens (1002) zwischen dem elektrischen Lenkmodus (EM) und dem mechanischen Lenkmodus (MM) auf der Grundlage der Energiemanagement-Parameterdaten.

20. Verfahren (1000) nach Anspruch 19, wobei die Energiemanagement-Parameterdaten mindestens umfassen: Fahrzeuggeschwindigkeitsdaten, Energiespeicher-Ladezustandsdaten, Energierückgewinnungs-Bremsdaten, Betriebsdaten des Getriebesystems, Fahrzeugpositionsdaten, Daten in Bezug auf die Straße vor dem Fahrzeug und Daten in Bezug auf eine geplante Route des Fahrzeugs.

21. Das Verfahren (1000) nach Anspruch 20, ferner umfassend:
- Bewirken, das Servolenkungssystem (100) auf der Grundlage von Daten, die sich auf die vordem Fahrzeug liegende Straße und/oder eine geplante Route des Fahrzeugs beziehen, im elektrischen Lenkmodus (EM), im mechanischen Lenkmodus (MM) oder im deaktivierten Lenkmodus (DM) zu betreiben.

22. Das Verfahren (1000) nach Anspruch 20 oder 21, ferner umfassend:
- Bewirken, das Servolenkungssystem (100) im elektrischen Lenkmodus (EM) zu betreiben, wenn die Geschwindigkeit des Fahrzeugs (1) unter einen Schwellenwert für die elektrische Lenkgeschwindigkeit fällt.

23. Das Verfahren (1000) nach einem der Ansprüche 20-22, ferner umfassend:
- Bewirken, das Servolenkungssystem (100) im mechanischen Lenkmodus (MM) zu betreiben, wenn die Geschwindigkeit des Fahrzeugs (1) einen Schwellenwert für die mechanische Lenkgeschwindigkeit überschreitet.

24. Das Verfahren (1000) nach einem der Ansprüche 20-23, ferner umfassend:
- Bewirken, das Servolenkungssystem (100) im mechanischen Lenkmodus (MM) zu betreiben, wenn der Ladezustand des Energiespeichers (10) unter einen Schwellenwert für den Ladezustand des mechanischen Antriebs fällt.

25. Das Verfahren (1000) nach einem der Ansprüche 20-24, ferner umfassend:
- Bewirken, dass das Servolenkungssystem (100) im mechanischen Lenkmodus (MM) zu betreiben, wenn die Energierückgewinnungsdaten anzeigen, dass ein regeneratives Bremsen des Fahrzeugs (1) vorhergesagt und/oder eingeleitet wird.

26. Das Verfahren (1000) nach einem der Ansprüche 20-25, ferner umfassend:
- Bewirken, das Servolenkungssystem (100) im deaktivierten Lenkmodus (DM) zu betreiben, wenn die Geschwindigkeit des Fahrzeugs (1) einen Schwellenwert für die deaktivierte Fahrzeuggeschwindigkeit überschreitet.

27. Das Verfahren (1000) nach einem der Ansprüche 20-26, ferner umfassend:
- Bewirken, das Servolenkungssystem (100) im deaktivierten Lenkmodus (DM) zu betreiben, wenn die Betriebsdaten des Getriebesystems anzeigen, dass ein Gangwechsel im Getriebesystem (3) vorhergesagt und/oder eingeleitet wird.

## Revendications

1. Système de direction assistée (100) pour un véhicule (1), le système de direction assistée (100) comprenant une pompe de direction assistée (110), une unité de machine électrique (130), un agencement d'embrayage (120) et un système de commande de direction assistée (140) configuré pour commander le système de direction assistée (100), dans lequel :
- l'unité de machine électrique (130) est configurée pour entraîner la pompe de direction assistée (110) et pour être fonctionnellement connectée à et alimentée par un stockage d'énergie (10) du véhicule (1),
- la pompe de direction assistée (110) est configurée pour être connectée à une source de sortie de couple (6, 7) agencée en aval d'un système de transmission (3) du véhicule (1), la pompe de direction assistée (110) étant configurée pour être entraînée au moyen d'un couple fourni par la source de sortie de couple (6, 7),
- l'agencement d'embrayage (120) est configuré pour connecter sélectivement la pompe de direction assistée (110) à la source de sortie de couple (6, 7),
dans lequel le système de commande de direction assistée (140) est configuré pour commander l'agencement d'embrayage (120) et l'unité de machine électrique (130) afin d'amener le système de direction assistée (100) à pouvoir fonctionner dans un mode de direction électrique (EM), dans lequel l'unité de machine électrique (130) entraîne la pompe de direction assistée (110), et un mode de direction mécanique (MM) dans lequel la pompe de direction assistée (110) est entraînée par l'intermédiaire du couple fourni par la source de sortie de couple (6, 7).

2. Système de direction assistée (100) selon la revendication 1, dans lequel le système de commande de direction assistée (140) est configuré pour provoquer une activation d'un transfert de couple depuis l'unité de machine électrique (130) vers la pompe de direction assistée (110) et l'agencement d'embrayage (120) afin de déconnecter la pompe de direction assistée (110) de la source de sortie de couple (6, 7) dans le mode de direction électrique (EM).

3. Système de direction assistée (100) selon l'une quelconque des revendications 1 à 2, dans lequel le système de commande de direction assistée (140) est configuré pour provoquer une désactivation d'un transfert de couple depuis l'unité de machine électrique (130) vers la pompe de direction assistée (110) et l'agencement d'embrayage (120) afin de connecter la pompe de direction assistée (110) à la source de sortie de couple (6, 7) dans le mode de direction mécanique (MM).

4. Système de direction assistée (100) selon l'une quelconque des revendications 1 à 3, dans lequel l'agencement d'embrayage (120) peut fonctionner entre un état fermé dans lequel l'agencement d'embrayage (120) connecte la source de sortie de couple (6, 7) à la pompe de direction assistée (110), et un état ouvert dans lequel l'agencement d'embrayage (120) déconnecte la source de sortie de couple (6, 7) de la pompe de direction assistée (110).

5. Système de direction assistée (100) selon l'une quelconque des revendications 1 à 4, dans lequel le système de commande de direction assistée (140) est configuré pour commander le transfert de couple entre la pompe de direction assistée (110) et l'unité de machine électrique (130) par l'intermédiaire d'une commande d'un embrayage de machine électrique (132) de l'unité de machine électrique (130) et/ou d'une commande d'une machine électrique (131) de l'unité de machine électrique (130).

6. Système de direction assistée (100) selon l'une quelconque des revendications 1 à 5, dans lequel la source de sortie de couple (6, 7) est un arbre de transmission (6) du véhicule (1) ou un arbre de sortie de transmission connecté au système de transmission (3).

7. Système de direction assistée (100) selon l'une quelconque des revendications 1 à 6, dans lequel la source de sortie de couple (6, 7) est un arbre intermédiaire (7) du véhicule (1).

8. Système de direction assistée (100) selon l'une quelconque des revendications 1 à 7, dans lequel le système de commande de direction assistée (140) est configuré pour commander l'agencement d'embrayage (120) et l'unité de machine électrique (130) afin d'amener le système de direction assistée (100) à pouvoir fonctionner dans un mode de direction désactivé (DM) dans lequel le système de direction assistée (100) ne fournit aucune assistance pour la direction du véhicule (1).

9. Système de direction assistée (100) selon l'une quelconque des revendications 1 à 8, dans lequel le système de commande de direction assistée (140) est configuré pour amener le système de direction assistée (100) à fonctionner dans l'un quelconque du mode de direction électrique (ED), du mode de direction mécanique (MD) et du mode de direction désactivé (DM) sur la base de données de paramètre de gestion d'énergie relatives au fonctionnement du véhicule (1).

10. Système de direction assistée (100) selon la revendication 9, dans lequel les données de paramètre de gestion d'énergie comprennent au moins certaines parmi : des données de vitesse de véhicule, des données d'état de stockage d'énergie de charge, des données de freinage de récupération d'énergie, des données de fonctionnement de système de transmission, des données de position de véhicule, des données relatives à la route devant le véhicule et des données relatives à un itinéraire planifié du véhicule.

11. Système de direction assistée (100) selon la revendication 10, dans lequel le système de commande de direction assistée (140) est configuré pour amener le système de direction assistée (100) à fonctionner dans l'un quelconque du mode de direction électrique (EM), du mode de direction mécanique (MM) et du mode de direction désactivé (DM) sur la base de données relatives à la route devant le véhicule et/ou à un itinéraire planifié du véhicule.

12. Système de direction assistée (100) selon la revendication 10 ou 11, dans lequel le système de commande de direction assistée (140) est configuré pour amener le système de direction assistée (100) à fonctionner dans le mode de direction électrique (EM) en réponse à la vitesse du véhicule (1) tombant en dessous d'un seuil de vitesse de direction électrique.

13. Système de direction assistée (100) selon l'une quelconque des revendications 10 à 12, dans lequel le système de commande de direction assistée (140) est configuré pour amener le système de direction assistée (100) à fonctionner dans le mode de direction mécanique (MM) en réponse à la vitesse du véhicule (1) dépassant un seuil de vitesse de direction mécanique.

14. Système de direction assistée (100) selon l'une quelconque des revendications 10 à 13, dans lequel le système de commande de direction assistée (140) est configuré pour amener le système de direction assistée (100) à fonctionner dans le mode de direction mécanique (MM) en réponse à l'état de charge du stockage d'énergie (10) tombant en dessous d'un seuil d'état de charge d'entraînement mécanique.

15. Système de direction assistée (100) selon l'une quelconque des revendications 10 à 14, dans lequel le système de commande de direction assistée (140) est configuré pour amener le système de direction assistée (100) à fonctionner dans le mode de direction mécanique (MM) en réponse aux données de récupération d'énergie indiquant qu'un freinage régénératif du véhicule (1) est prédit et/ou initié.

16. Système de direction assistée (100) selon l'une quelconque des revendications 10 à 15, dans lequel le système de commande de direction assistée (140) est configuré pour amener le système de direction assistée (100) à fonctionner dans le mode de direction désactivé (DM) en réponse à la vitesse du véhicule (1) dépassant un seuil de vitesse de véhicule de désactivation.

17. Système de direction assistée (100) selon l'une quelconque des revendications 10 à 16, dans lequel le système de commande de direction assistée (140) est configuré pour amener le système de direction assistée (100) à fonctionner dans le mode de direction désactivé (DM) en réponse aux données opérationnelles du système de transmission indiquant qu'un changement de vitesse dans le système de transmission (3) est prédit et/ou initié.

18. Véhicule (1) comprenant le système de direction assistée (100) selon l'une quelconque des revendications 1 à 17, un système de transmission (3), un stockage d'énergie (10), une source de sortie de couple (6, 7) et une source de propulsion (2) connectée au système de transmission (3).

19. Procédé (1000) pour faire fonctionner un système de direction assistée (100) selon l'une quelconque des revendications 1 à 17, dans lequel le procédé comprend les étapes consistant à :
- obtenir (1001) des données de paramètre de gestion d'énergie relatives au fonctionnement du véhicule (1), et
- provoquer une commutation (1002) entre le mode de direction électrique (EM) et le mode de direction mécanique (MM) sur la base desdites données de paramètre de gestion d'énergie.

20. Procédé (1000) selon la revendication 19, dans lequel les données de paramètre de gestion d'énergie comprennent au moins certaines parmi : des données de vitesse de véhicule, des données d'état de stockage d'énergie de charge, des données de freinage de récupération d'énergie, des données de fonctionnement de système de transmission, des données de position de véhicule, des données relatives à la route devant le véhicule et des données relatives à un itinéraire planifié du véhicule.

21. Procédé (1000) selon la revendication 20, comprenant en outre l'étape consistant à :
- amener le système de direction assistée (100) à fonctionner dans l'un quelconque du mode de direction électrique (EM), du mode de direction mécanique (MM) et du mode de direction désactivé (DM) sur la base de données relatives à la route devant le véhicule et/ou à un itinéraire planifié du véhicule.

22. Procédé (1000) selon la revendication 20 ou 21, comprenant en outre l'étape consistant à :
- amener le système de direction assistée (100) à fonctionner dans le mode de direction électrique (EM) en réponse à la vitesse du véhicule (1) tombant en dessous d'un seuil de vitesse de direction électrique.

23. Procédé (1000) selon l'une quelconque des revendications 20 à 22, comprenant en outre l'étape consistant à :
- amener le système de direction assistée (100) à fonctionner dans le mode de direction mécanique (MM) en réponse à la vitesse du véhicule (1) dépassant un seuil de vitesse de direction mécanique.

24. Procédé (1000) selon l'une quelconque des revendications 20 à 23, comprenant en outre l'étape consistant à :
- amener le système de direction assistée (100) à fonctionner dans le mode de direction mécanique (MM) en réponse à l'état de charge du stockage d'énergie (10) tombant en dessous d'un seuil d'état de charge d'entraînement mécanique.

25. Procédé (1000) selon l'une quelconque des revendications 20 à 24, comprenant en outre l'étape consistant à :
- amener le système de direction assistée (100) à fonctionner dans le mode de direction mécanique (MM) en réponse aux données de récupération d'énergie indiquant qu'un freinage régénératif du véhicule (1) est prédit et/ou initié.

26. Procédé (1000) selon l'une quelconque des revendications 20 à 25, comprenant en outre l'étape consistant à :
- amener le système de direction assistée (100) à fonctionner dans le mode de direction désactivé (DM) en réponse à la vitesse du véhicule (1) dépassant un seuil de vitesse de véhicule de désactivation.

27. Procédé (1000) selon l'une quelconque des revendications 20 à 26, comprenant en outre l'étape consistant à :
- amener le système de direction assistée (100) à fonctionner dans le mode de direction désactivé (DM) en réponse à des données de fonctionnement du système de transmission indiquant qu'un changement de vitesse dans le système de transmission (3) est prédit et/ou initié.
